# EUROPEAN PATENT SPECIFICATION

(11) **EP 0 944 465 B1**
(45) Date of publication and mention of the grant of the patent: **20.11.2002**
(21) Application number: 97950480.0
(22) Date of filing: 12.12.1997
(51) Int. Cl.: B29C 45/16

(54) **METHOD AND MOULD FOR MOULDING A SEALING ASSEMBLY COMPRISING A SEALING RING AND A RETAINING RING**
VERFAHREN UND FORM ZUM FORMEN EINER DICHTUNGSANORDNUNG MIT EINEM DICHTUNGSRING UND EINEM HALTERING
PROCEDE ET MOULE DESTINES AU MOULAGE D'UN ENSEMBLE ETANCHEITE COMPRENANT UN ANNEAU D'ETANCHEITE ET UN ANNEAU DE BLOCAGE

(30) Priority: 16.12.1996 NL 1004791
(43) Date of publication of application: 29.09.1999
(73) Proprietor: WAVIN B.V., 8011 CW Zwolle (NL)
(72) Inventor: KANTERS, Arnoldus, Franciscus, Cornelis, NL-7701 MR Dedemsvaart (NL); DE GREEF, Peter, Evert, Jacobus, NL-7701 CN Dedemsvaart (NL)
(74) Representative: Iemenschot, Johannes Andreas, Ir.
(86) International application number: NL9700685
(87) International publication number: WO98026916

(56) References cited:
- EP-A- 0 188 300
- EP-A- 0 748 973

## Description

The invention relates to a method and a mould for moulding a sealing assembly which is to be placed essentially inside a socket end of a pipe joint and which comprises a sealing ring made of an elastomeric material and a retaining ring made of a relatively stiff, thermoplastic material, the sealing ring and the retaining ring being firmly joined to one another and generally being disposed coaxially in line with one another.

Such a sealing assembly is described in the non-prepublished Dutch Patent Application 1 000 584. The sealing assembly concerned was found not to be capable of being satisfactorily moulded by known techniques.

A method and a mould for moulding a sealing assembly which comprises a sealing ring and a retaining ring which are not disposed in line with one another is described in the european patent application EP 0 188 300.

The object of the invention is therefore to provide a method and a mould with which a sealing assembly of the type described can expediently be moulded, which sealing assembly can satisfy all the requirements imposed thereon.

This object is achieved according to the invention by a method for moulding a sealing assembly according to claim 1 and a mould according to claim 6.

Particular embodiments of the invention are the subject of the dependent claims.

The invention is explained in greater detail in the following description of preferred embodiments of the method and the mould according to the invention with reference to the drawings, in which:
Figure 1 is an axial section of a portion of a socket end of a pipe joint in which a sealing assembly moulded according to the invention is provided, and.
Figure 2 shows, in an axial section, a portion of a mould according to the invention with sealing assembly moulded therein.

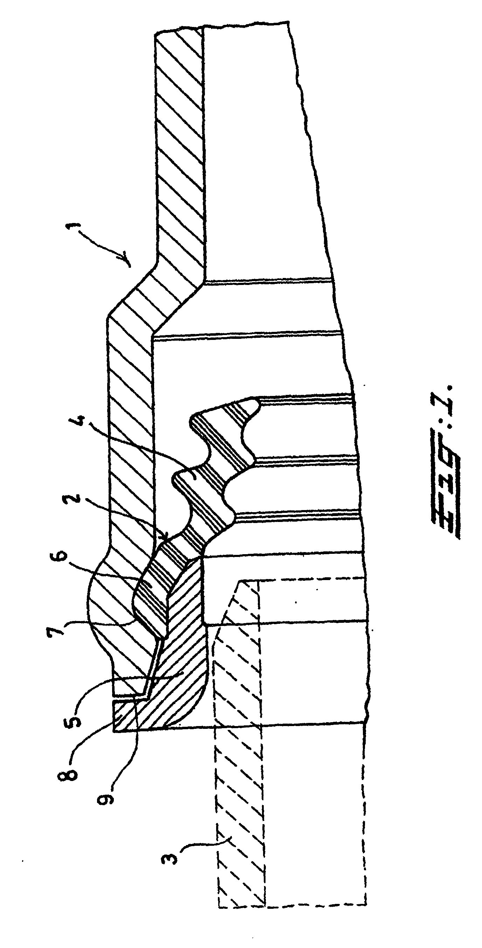

Figure 1 shows a portion of a socket end 1 of a pipe part. The socket end 1 is provided on the inside with a separate sealing assembly 2. A spigot 3 of another pipe part can be inserted into the socket end in order to form a joint between said two pipe parts. In particular, the pipe parts are moulded from plastics material, such as polyvinyl chloride (PVC) or polypropylene (PP) or from another material suitable for pipes.

The sealing assembly 2 comprises a sealing ring 4 made of an elastomeric material and a retaining ring 5 joined thereto and made of a stiff material. With spigot 3 inserted into the socket end 1, the sealing ring 4 is intended to provide the seal between the socket end 1 and the spigot end 3. The retaining ring is preferably made of a stiff plastics material, for example polypropylene.

The sealing assembly 2 is preferably made by coinjection, the sealing ring 4 and the retaining ring 5 being firmly joined to one another during the moulding process. The sealing ring 4 is therefore preferably composed of a thermoplastic elastomer which readily adheres to the material of the retaining ring 5.

In the embodiment shown, the sealing assembly is provided on the outside with a circumferential, outwardly projecting rib 6. Said rib 6 falls, preferably as a fit, into a groove 7 provided on the inside of the socket end 1. This achieves the object that the sealing assembly 2 is very well positioned in the axial direction with respect to the socket end 1.

The retaining ring 5 is provided, on the side remote from the sealing ring 4, with an outwardly projecting rim 8. Said rim 8 is disposed against the head end 9 of the socket end 1 on it or at a short distance from it when the seal assembly 2 is provided in the socket end 1. The rim 8 serves to camouflage the gap 10 between the retaining ring 5 and the socket end 1. The rim 8 is not necessary for positioning the seal assembly 2 in the socket end 1.

In the non-prepublished Dutch Patent Application 1 000 584, a number of other possible embodiments of a seal assembly of the abovementioned type are described in greater detail, which embodiments can be moulded with the method described below.

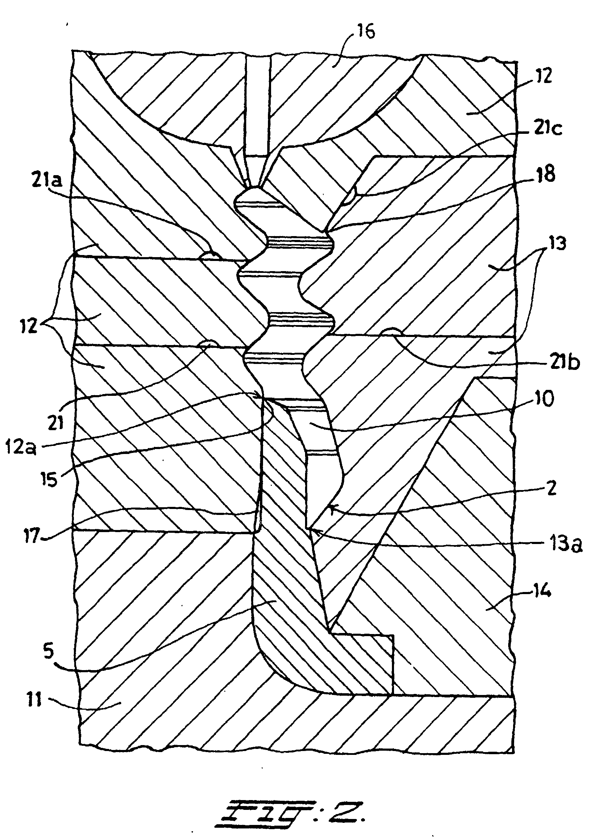

The method for moulding the sealing assembly 2 described above is described with reference to Figure 2, in which a portion of a mould with sealing assembly 2 moulded therein is shown in axial section.

First of all, the retaining ring 5 is formed by injection moulding in a first mould cavity of a mould (not shown). The mould is then opened, the retaining ring 5 remaining firmly seated on a first core 11, and the first core 11 is conveyed along with the retaining ring 5 to a position in which the sealing ring 4 is moulded by injection moulding in a second mould cavity 10. This situation is shown in Figure 2.

The second mould cavity 10 is bounded by a second core 12 and an annular outer part 13 of the mould and a portion of the retaining ring 5 already moulded.

At the position of the junction between the retaining ring 5 and the sealing ring 4 to be moulded in the second mould cavity 10, the retaining ring 5 is clamped against the core 12 which projects into the retaining ring 5 and tapers slightly, and seals off the second mould cavity 10 at that position. The conical shape of the core 12 is desirable in order that, when the mould is closed, in which operation the core 12 and the outer part move in the axial direction with respect to the core 11 with the retaining ring 5 thereon, there is sufficient play between the front of the core 12 and the retaining ring 5 for the core 12 to pass readily over the retaining ring 5 and, in case of a closed mould, the retaining ring 5 is disposed in a clamping fashion on the core 12 in order to form a good seal with respect thereto. The entry of the core 12 into the retaining ring 5 is simplified still further by also providing a rounding-off 15 at the unsupported end of the retaining ring 5.

The outer part 13 is annular in order to prevent seams from being produced on the sealing ring 4, which seams could be the cause of leakage. The portion of the outer part 13 which is in contact with the retaining ring 5 is also conically constructed in order to bring about a firm clamping on the retaining ring 5 and, consequently, a good seal at that position.

During the injection of the material of the sealing ring 4 into the second mould cavity 10 via a sprue part 16, the seal between the retaining ring 5 and the core 12 is reinforced still further by the flow and the pressure of the injected material. To guide the flow of the injected material, the retaining ring has a special shape on the side directed towards the sprue part 16, as can be seen in Figure 2.

A space 17 is present between the retaining ring 5 and the core 12. Said space 17 is provided in order to prevent a rim being produced on the inside of the retaining ring 5 after the injection of the sealing ring 4, which rim could present problems during the fitting of a spigot end 3 (not bevelled or deburred) into the socket end 1 with sealing assembly 2. The minimum rim which now remains presents no assembly problems during the insertion of the spigot end 3 since said rim does not give rise to interference in the direction of movement of the spigot end 3.

In the mould, the retaining ring 5 and the second mould cavity 10 are disposed in the axial direction virtually in line with one another in order to make possible the demoulding of the moulded sealing assembly, in particular the sealing ring 4 thereof, without damage occurring. After cooling, the sealing ring 4 acquires its desired conical shape.

During the demoulding of the sealing assembly 2, the core 12 is first pulled out, which can be done with a linear movement since the moulded sealing ring 4 extends essentially in the axial direction in the mould. Therefore, the sprue part 16 (hot runner) can also be of a known design. In this situation, there is sufficient space between the outer part 13 and the core 12 to keep the sealing ring 4 undamaged. This is further promoted by a rounding-off 18 on the outer part 13 and consequently on the sealing ring 4, which rounding-off prevents the sealing ring 4 from being cut into or damaged when the core is pulled out.

The outer part 13 is then moved in the axial direction, while a mould part 14 still does not move and firmly holds the retaining ring 5 on the core 11. This ensures that the sealing assembly 2 does not remain stuck in the outer part 13. During the further opening of the mould, in which operation the mould part 14 is also moved, the sealing assembly 2 can be pulled off the core 11.

The core 12 and the outer part 13 are made up of a number of plates. At the position of the separating planes between the plates, vents 21, 21a, 21b, 21c etc. are provided. As a result of the position of said vents, any marks which remain behind on the sealing ring 4 as a consequence will not result in the risk of leakage because the marks are not disposed at critical positions.

## Claims

1. Method for moulding a sealing assembly (2) which is to be placed essentially inside a socket end (1) of a pipe joint and which comprises a sealing ring (4) made of an elastomeric material and a retaining ring (5) made of a thermoplastic material which is stiffer than the elastomeric material of the sealing ring (4), the sealing ring (4) and the retaining ring (5) being firmly joined to one another and generally being disposed coaxially in line with one another, which method comprises the steps of moulding the retaining ring (5) in a first mould cavity of a mould, during which step a first core part (11) of the mould moulds a part of the inside of the retaining ring (5), opening the mould, during which step the retaining ring (5) remains firmly seated on the first core part (11), forming a second mould cavity (10) for moulding the sealing ring, by placing an annular outer part (13) of the mould around the retaining ring (5) seated on the first core part (11), which outer part (13) is intended for moulding at least the major part of the radial outside of the sealing ring (4), and by introducing a separate second core part (12) of the mould into the retaining ring (5), which second core part (12) is intended for moulding at least the radial inside of the sealing ring, the second mould cavity (10) thus being bounded by a portion of the retaining ring (5) seated on the first core part (11), the annular outer part (13) and the second core part (12), the second mould cavity (10) being sealed at the position of the junctions (12a, 13a) between the retaining ring (5) and the second core part (12) and between the retaining ring (5) and the outer part (13), respectively, as a result of the retaining ring (5) being clamped on the inside onto the second core part (12) and the outer part (13) being clamped against outside of the retaining ring (5), moulding the sealing ring (4) in the second mould cavity (10) and demoulding the moulded sealing assembly (2).

2. Method according to claim 1, wherein, during the moulding of the retaining ring (5), the rim of the retaining ring (5) is provided with a rounding-off (15) on the inside at the position of the junction with the sealing ring (4) to be moulded.

3. Method according to claim 1 or 2, wherein, during the moulding of the retaining ring (5), the internal diameter of a portion, adjoining the junction with the sealing ring (4) to be moulded, of the retaining ring (5) is made somewhat larger than the internal diameter of the remainder of the retaining ring (5).

4. Method according to one of claims 1-3, wherein the moulded sealing assembly (2) is demoulded by first demoulding the sealing ring (4), the sealing assembly (2) being retained in the mould, and then ejecting the sealing assembly (2) out of the mould.

5. Method according to one of claims 1-4, wherein, during the demoulding of the sealing ring (4), the inside is first demoulded by pulling out the second core part (12) and the outside is then demoulded by pulling away the outer part (13) in the axial direction.

6. Mould for moulding the sealing ring of a sealing assembly (2) which is to be placed essentially within a socket end (1) of a pipe joint and which comprises a sealing ring (4) made of an elastomeric material and a retaining ring (5) made of a thermoplastic material which is stiffer than the elastomeric material of the sealing ring (4), the sealing ring (4) and the retaining ring (5) being firmly joined to one another and generally being disposed coaxially in line with one another, which mould comprises a first core part (11) adapted to hold the retaining ring (5) in a fitting manner, and also a separate second core part (12), an annular outer part (13) and a fourth mould part (14), the second core part (12), the annular outer part (13) and the fourth mould part (14) being arranged such that in the condition of the mould in which the sealing ring (4) is moulded, the retaining ring (5) is held on the first core part (11), the fourth mould part (14) retains the retaining ring (5) on the first core part (11), and the second core part (12) and the outer part (13) are positioned with respect to one another in such a way that they bound, together with the retaining ring (5), a second mould cavity (10) for moulding the sealing ring (4) which extends essentially in the axial elongation of the retaining ring (5), the outer part (13) projecting into the fourth mould part (14) and adjoining the outside of the retaining ring (5) so as to form a seal, the second core part (12) adjoining the inside of the retaining ring (5) so as to form a seal and adjoining the outer part (13).

7. Mould according to claim 6, wherein that part of the second core part (12) which adjoins the inside of the retaining ring (5) is of tapering design.

8. Mould according to claim 6, wherein that part of the outer part (13) which adjoins the outside of the retaining ring (5) is of conical design.

9. Mould according to one of claims 6-8, wherein the outer part (13) is provided with a rounding-off (18) at the position of the junction with the second core part (12).

## Patentansprüche

1. Verfahren zum Formen einer Dichtungsanordnung (2), die im wesentlichen im Inneren eines Muffenendes (1) einer Rohrverbindung anzubringen ist und die einen aus einem elastomeren Material hergestellten Dichtungsring (4) und einen aus einem thermoplastischen Material hergestellten Haltering (5) umfaßt, der steifer ist als das elastomere Material des Dichtungsrings (4), wobei der Dichtungsring (4) und der Haltering (5) fest miteinander verbunden und im allgemeinen koaxial fluchtend miteinander angeordnet sind, welches Verfahren die Schritte umfaßt, daß der Haltering (5) in einem ersten Formhohlraum einer Form geformt wird, während welchen Schrittes ein erster Kernteil (11) der Form einen Teil der Innenseite des Halterings (5) formt, die Form geöffnet wird, während welchen Schrittes der Haltering (5) mit festem Sitz auf dem ersten Kernteil (11) verbleibt, ein zweiter Formhohlraum (10) zum Formen des Dichtungsrings geformt wird, indem ein ringförmiger Außenteil (13) der Form um den auf dem ersten Kemteil (11) sitzenden Haltering (5) aufgebracht wird, welcher Außenteil (13) dazu bestimmt ist, zumindest den größeren Teil der radialen Außenseite des Dichtungsrings (4) zu formen, und ein gesonderter zweiter Kernteil (12) der Form in den Haltering (5) eingeführt wird, welcher zweite Kernteil (12) dazu dient, zumindest die radiale Innenseite des Dichtungsrings zu formen, so daß der zweite Formhohlraum (10) von einem Bereich des auf dem ersten Kernteil (11) sitzenden Halterings (5), dem ringförmigen Außenteil (13) und dem zweiten Kernteil (12) begrenzt wird, der zweite Formhohlraum (10) an der Stelle der Verbindungen (12a, 13a) zwischen dem Haltering (5) und dem zweiten Kernteil (12) bzw. zwischen dem Haltering (5) und dem Außenteil (13) als Ergebnis dessen abgedichtet wird, daß der Haltering (5) an der Innenseite auf den zweiten Kernteil (12) aufgespannt und der Außenteil (13) gegen die Außenseite des Halterings (5) gespannt wird, der Dichtungsring (4) in dem zweiten Formhohlraum (10) geformt und die geformte Dichtungsanordnung (2) entformt wird.

2. Verfahren nach Anspruch 1, bei dem, während des Formens des Halterings (5), der Rand des Halterings (5) mit einer Abrundung (15) auf der Innenseite an der Stelle der Verbindung mit dem formenden Dichtungsring (4) versehen wird.

3. Verfahren nach Anspruch 1 oder 2, bei dem, während des Formens des Halterings (5), der Innendurchmesser eines an die Verbindung mit dem zu formenden Dichtungsring (4) angrenzenden Bereichs des Halterings (5) etwas größer gemacht wird als der Innendurchmesser des übrigen Teils des Halterings (5).

4. Verfahren nach einem der Ansprüche 1 bis 3, bei dem die geformte Dichtungsanordnung (2) dadurch entformt wird, daß zuerst der Dichtungsring (4) entformt wird, wobei die Dichtungsanordnung (2) in der Form bleibt, und dann die Dichtungsanordnung (2) aus der Form ausgehoben wird.

5. Verfahren nach einem der Ansprüche 1 bis 4, bei dem, während des Entformens des Dichtungsrings (4), zuerst die Innenseite durch Herausziehen des zweiten Kernteils (12) entformt wird und sodann die Außenseite durch Wegziehen des Außenteils (13) in axialer Richtung entformt wird.

6. Form zum Formen des Dichtungsrings einer Dichtungsanordnung (2), die im wesentlichen in einem Muffenende (1) einer Rohrverbindung anzubringen ist und die einen aus einem elastomeren Material hergestellten Dichtungsring (4) und einen aus einem thermoplastischen Material hergestellten Haltering (5) umfaßt, der steifer ist als das elastomere Material des Dichtungsrings (4), wobei der Dichtungsring (4) und der Haltering (5) fest miteinander verbunden und im allgemeinen koaxial fluchtend miteinander angeordnet sind, welche Form einen ersten Kernteil (11), der geeignet ist, den Haltering (5) passend zu halten, und ferner einen gesonderten zweiten Kernteil (12), einen ringförmigen Außenteil (13) und einen vierten Formteil (14) umfaßt, wobei der zweite Kernteil (12), der ringförmige Außenteil (13) und der vierte Formteil (14) derart angeordnet sind, daß in dem Zustand der Form, in dem der Dichtungsring (4) geformt wird, der Haltering (5) auf dem ersten Kernteil (11) gehalten wird, der vierte Formteil (14) den Haltering (5) auf dem ersten Kernteil (11) hält, und der zweite Kernteil (12) und der Außenteil (13) derart in bezug zueinander angeordnet sind, daß sie zusammen mit dem Haltering (5) einen zweiten Formhohlraum (10) zum Formen des Dichtungsrings (4) begrenzen, der sich im wesentlichen in axialer Verlängerung des Halterings (5) erstreckt, wobei der Außenteil (13) in den vierten Formteil (14) vorragt und an die Außenseite des Halterings (5) angrenzt, um so eine Abdichtung zu bilden, und der zweite Kernteil (12) an die Innenseite des Halterings (5) angrenzt, um so eine Dichtung zu bilden, und an den Außenteil (13) angrenzt.

7. Form nach Anspruch 6, bei der derjenige Teil des zweiten Kernteils (12), der an die Innenseite des Halterings (5) angrenzt, eine sich verjüngende Ausbildung hat.

8. Form nach Anspruch 6, bei der derjenige Teil des Außenteils (13), der an die Außenseite des Halterings (5) angrenzt, eine konische Ausbildung hat.

9. Form nach einem der Ansprüche 6 bis 8, bei der der Außenteil (13) mit einer Abrundung (18) an der Stelle der Verbindung mit dem zweiten Rohrteil (12) versehen ist.

## Revendications

1. Procédé pour mouler un ensemble d'étanchéité (2) destiné à être placé essentiellement à l'intérieur d'une extrémité femelle (1) d'un raccord de tuyaux et comprenant une bague d'étanchéité (4) formée d'une matière élastomère et une bague de retenue (5) formée d'une matière thermoplastique plus rigide que la matière élastomère de la bague d'étanchéité (4), la bague d'étanchéité (4) et la bague de retenue (5) étant reliées solidement entre elles et disposées de manière générale coaxialement en alignement l'une avec l'autre, procédé qui comprend une étape de moulage de la bague de retenue (5) dans une première cavité de moulage d'un moule, étape au cours de laquelle une portion de la partie intérieure de la bague de retenue (5) est moulée par un premier élément formant noyau (11) du moule, une étape d'ouverture du moule, étape au cours de laquelle la bague de retenue (5) reste solidement fixée sur le premier élément formant noyau (11), une étape qui consiste à former une seconde cavité de moulage (10) pour mouler la bague d'étanchéité, en plaçant un élément extérieur annulaire (13) du moule autour de la bague de retenue (5) fixée sur le premier élément formant noyau (11), élément extérieur (13) qui est destiné à mouler au moins la majorité de la partie extérieure radiale de la bague d'étanchéité (4), et en introduisant un deuxième élément formant noyau séparé (12) du moule dans la bague de retenue (5), deuxième élément formant noyau (12) qui est destiné à mouler au moins la partie intérieure radiale de la bague d'étanchéité, la seconde cavité (10) du moule étant ainsi délimitée par une portion de la bague de retenue (5) fixée sur le premier élément formant noyau (11), par l'élément extérieur annulaire (13) et par le deuxième élément formant noyau (12), la seconde cavité (10) du moule étant fermée hermétiquement au niveau de la position des jonctions (12a, 13a) entre la bague de retenue (5) et le deuxième élément formant noyau (12) et entre la bague de retenue (5) et l'élément extérieur (13), respectivement, par suite du serrage de la bague de retenue (5) sur la partie intérieure de celle-ci contre le deuxième élément formant noyau (12) et de l'élément extérieur (13) contre la partie extérieure de la bague de retenue (5), une étape de moulage de la bague d'étanchéité (4) dans la seconde cavité (10) du moule et une étape de démoulage de l'ensemble d'étanchéité moulé (2).

2. Procédé selon la revendication 1, dans lequel, au cours du moulage de la bague de retenue (5), le bord de celle-ci est pourvu d'un arrondi (15) sur sa partie intérieure au niveau de la position de la jonction avec la bague d'étanchéité (4) qui doit être moulée.

3. Procédé selon la revendication 1 ou 2, dans lequel, au cours du moulage de la bague de retenue (5), le diamètre intérieur d'une partie de celle-ci, adjacente à la jonction avec la bague d'étanchéité (4) qui doit être moulée, est formé pour être un peu plus grand que le diamètre intérieur du reste de la bague de retenue (5).

4. Procédé selon l'une quelconque des revendications 1 à 3, dans lequel le démoulage de l'ensemble d'étanchéité moulé (2) s'effectue en démoulant d'abord la bague d'étanchéité (4), l'ensemble d'étanchéité (2) étant retenu dans le moule, puis en éjectant l'ensemble d'étanchéité (2) hors du moule.

5. Procédé selon l'une quelconque des revendications 1 à 4, dans lequel, au cours du démoulage de la bague d'étanchéité (4), la partie intérieure est d'abord démoulée par extraction du deuxième élément formant noyau (12), après quoi la partie extérieure est démoulée par retrait de l'élément extérieur (13) dans la direction axiale.

6. Moule pour mouler la bague d'étanchéité d'un ensemble d'étanchéité (2) destiné à être placé essentiellement dans une extrémité femelle (1) d'un raccord de tuyaux et comprenant une bague d'étanchéité (4) formée d'une matière élastomère et une bague de retenue (5) formée d'une matière thermoplastique plus rigide que la matière élastomère de la bague d'étanchéité (4), la bague d'étanchéité (4) et la bague de retenue (5) étant solidement reliées entre elles et disposées de manière générale coaxialement en alignement l'une avec l'autre, moule qui comprend un premier élément formant noyau (11) adapté pour maintenir la bague de retenue (5) d'une manière fixe, ainsi qu'un deuxième élément formant noyau séparé (12), un élément extérieur annulaire (13) et un quatrième élément de moule (14), le deuxième élément formant noyau (12), l'élément extérieur annulaire (13) et le quatrième élément de moule (14) étant disposés de telle façon que lorsque le moule est à l'état dans lequel la bague d'étanchéité (4) est moulée, la bague de retenue (5) est maintenue sur le premier élément formant noyau (11) et le quatrième élément de moule (14) retient la bague de retenue (5) sur le premier élément formant noyau (11), tandis que le deuxième élément formant noyau (12) et l'élément extérieur (13) sont positionnés l'un par rapport à l'autre de manière à délimiter, conjointement avec la bague de retenue (5), une seconde cavité de moulage (10) destinée à mouler la bague d'étanchéité (4) qui s'étend essentiellement dans le prolongement axial de la bague de retenue (5), l'élément extérieur (13) faisant saillie dans le quatrième élément de moule (14) et étant adjacent à la partie extérieure de la bague de retenue (5) afin de former un joint étanche, et le deuxième élément formant noyau (12) étant adjacent à la partie intérieure de la bague de retenue (5) afin de former un joint étanche, et adjacent à l'élément extérieur (13).

7. Moule selon la revendication 6, dans lequel la portion du deuxième élément formant noyau (12) qui est adjacente à la partie intérieure de la bague de retenue (5) présente une configuration en biseau.

8. Moule selon la revendication 6, dans lequel la portion de l'élément extérieur (13) qui est adjacente à la partie extérieure de la bague de retenue (5) présente une configuration conique.

9. Moule selon l'une quelconque des revendications 6 à 8, dans lequel l'élément extérieur (13) est pourvu d'un arrondi (18) au niveau de la position de la jonction avec le deuxième élément formant noyau (12).
